# EUROPEAN PATENT SPECIFICATION

(11) **EP 1 253 795 B1**
(45) Date of publication and mention of the grant of the patent: **04.10.2006**
(21) Application number: 01900273.2
(22) Date of filing: 09.01.2001
(51) Int. Cl.: H04Q 7/38, H04L 29/08, H04L 1/18, H04L 29/06

(54) **DATA COMMUNICATION SYSTEM AND WIRELESS COMMUNICATION DEVICE**
DATENKOMMUNIKATIONSSYSTEM UND DRAHTLOSES KOMMUNIKATIONSGERÄT
SYSTEME DE COMMUNICATION DE DONNEES ET DISPOSITIF DE COMMUNICATIONS SANS FIL

(43) Date of publication of application: 30.10.2002
(73) Proprietor: MITSUBISHI DENKI KABUSHIKI KAISHA, Chiyoda-ku Tokyo 100-8310 (JP)
(72) Inventor: MAMIYA, Chiyo, Mitsubishi Denki K. K., Chiyoda-ku, Tokyo 100-8310 (JP); ITO, Shuji, Mitsubishi Denki K. K., Chiyoda-ku, Tokyo 100-8310 (JP)
(74) Representative: Sajda, Wolf E.
(86) International application number: PCT/JP2001/000040
(87) International publication number: WO 2002/056632

(56) References cited:
- EP-A- 1 018 821
- EP-A- 1 061 699
- JP-A- 11 243 419
- JP-A- 2000 253 096
- US-A- 5 377 192

## Description

### Technical Field

The present invention relates to a data communication system or a radio communication apparatus for carrying out radio data communication, and particularly to a control of data transmission and receipt acknowledgment response. In particular, the invention relates to a data communication system according to the preamble of claim 1. Such a system is known from US-A-5 377 192.

### Background Art

As a data communication system in which a receipt acknowledgment response signal is transmitted in response to transmitted data, for example, there is a TCP data communication system in which in response to transmitted TCP (Transmission Control Protocol) data, a TCP-ACK (Acknowledge) signal (hereinafter referred to as an ACK signal) as a reception acknowledgement signal is transmitted from a receiving part. In the TCP communication system, in the case where a link used by a plurality of users and ports is congested, an ACK signal does not reach a data transmitting part, so that a slow start processing is carried out to avoid the link congestion and the data transmission is suppressed.

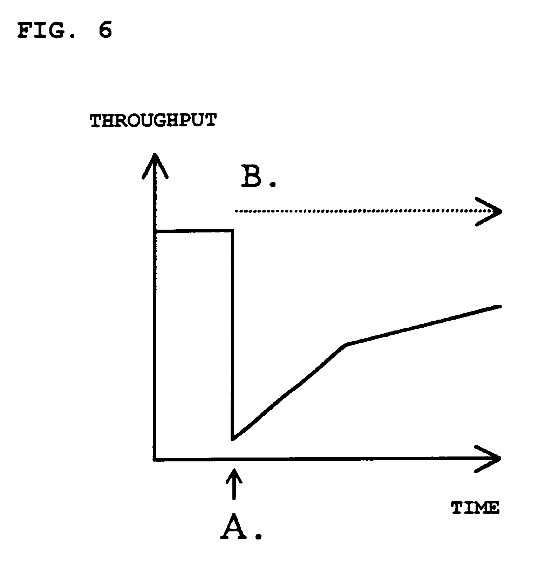

Fig. 6 shows a time change of throughput at the time of a slow start processing in a TCP data communication system, in which the horizontal axis indicates the time and the vertical axis indicates the throughput. If a link is congested by an increase of data transmitted through the link, there occurs a state in which between opposed transmission and reception, TCP data does not normally reach a receiving part and an ACK signal does not normally reach a transmitting part. At this time, at the transmitting part, if a time from the transmission of the TCP data to the reception of the ACK signal exceeds a predetermined set time and an ACK time-out occurs, it is judged that "the link is congested", and the slow start processing is carried out in which the amount of data to be transmitted (that is, throughput) is once lowered, and then, the amount of transmitted data (throughput) is gradually increased within a given time. In Fig. 6, an arrow A indicates the point of time when the time-out occurs, and an arrow B indicates a subsequent slow start processing period.

In the case where the TCP data communication is carried out through links including a radio link, there occurs a case where the TCP data or the ACK signal does not normally reach because of quality degradation of the radio link. Here, the quality degradation of the radio link means a received electric field level, BER (Bit Error Rate) degradation, instantaneous interruption, or the like which is caused by fading or handover performed by a movable receiving means to base stations, and any of them has such a property that it is immediately recovered. At this time, the TCP radio communication apparatus judges that the link is congested on the basis of the non-reception of the ACK signal, and carries out the foregoing slow start processing, so that there has been a problem that even if the quality of the radio link is immediately recovered, the throughput does not rise quickly.

Under document US-A-5 377 192 discloses a data communication system comprising a base station at one or more remote stations. Whenever a data packet is received by a remote station, an ACK signal is sent in return. If no ACK signal or an explicit NACK signal are received by the base station, no data packets, which have been transmitted in the time period since the non-acknowledged packet was originally sent, are re-transmitted.

In the conventional system according to US-A-5 377 192, in the case of a poor radio link or fading, the risk of losing connection due to a failure of transmission of an ACK signal is reduced by doubling the ACK signal, in order words, the remote station transmits a second redundant ACK signal.

The document EP-A-1 018 821 discloses a communication device and communication method for controlling a packet based communication between a sender and a receiver, wherein the receiver acknowledges successful transmission of each packet, The conventional method monitors parameters, like round trip time and delays, until a time-out of awaiting an ACK signal is triggered. Furthermore, each data packet can be provided with a tag whether the packet was already re-transmitted. These measures avoid any confusion of the origin of an ACK signal that could indicate either reception of the original packet or of the re-transmitted packet. Then, these monitoring parameters can be adapted in order to select an optimal set of parameters for current transmission conditions.

The present invention has been made to solve the above problem, and a first object thereof is to provide a data communication system in which in a case where a receipt acknowledgment signal can not be obtained because of quality deterioration of a radio link, a slow start processing is avoided and data communication can be quickly reopened.

Besides, a second object is to provide a data communication system in which in a case where a receiving part receives data having an error because of quality deterioration of a radio link, a slow start processing is avoided and data communication can be quickly reopened.

Besides, a third object is to provide a radio communication apparatus in which in a case where a receipt acknowledgment signal can not be obtained because of quality degradation of a radio link, a slow start processing is avoided and data communication can be quickly reopened.

Besides, a fourth object is to provide a radio communication apparatus in which in a case where a receipt acknowledgment signal can not be obtained because of quality degradation of a radio link, a slow start processing is avoided by simple control and data communication can be quickly reopened.

A fifth object is to provide a data communication system in which in a case where a receipt acknowledgment signal can not be obtained because of handover of a movable receiving means, a slow start processing is avoided and data communication can be quickly reopened.

According to the invention, the object is solved by a data communication system comprising the features of claim 1. Advantageous further developments of the data communication system according to the invention are specified in the sub-claims.

According to the invention, the problems of conventional systems can readily be overcome. According to the invention, the data transmitting part uses a pseudo receipt acknowledgement signal whenever the regular ACK signal of the terminal is not received prior to a fixed time or period. Then, the terminal or server connected to a terminal will send further data in response to the pseudo-ACK signal which the terminal or the server cannot distinguish from the real ACK signal. Sending of this data can be processed with full bandwidth.

### Disclosure of the Invention

A data communication system according to the invention is constructed such that a data transmitting part transmits data through a radio link, and a data receiving part sends back a receipt acknowledgment signal to notify reception, and in a case where the receipt acknowledgment signal can not be obtained because of quality degradation of the radio link, a control is carried out so that a pseudo receipt acknowledgment signal is used to avoid a reduction of throughput from the data transmitting part which occurs in the case where the receipt acknowledgment signal can not be obtained.

The data communication system of the invention carries out a control so that the data transmitting part receives the pseudo receipt acknowledgment signal to avoid the reduction of the throughout.

According to the data communication system of the invention, in the case where the receipt acknowledgment signal can not be obtained because of the quality degradation of the radio link, the slow start processing is avoided by using the pseudo receipt acknowledgment signal, so that the data communication can be quickly reopened after the recovery of the quality degradation of the radio link.

Besides, the data communication system according to the invention carries out a control so that in a case where the data receiving part receives data having an error because of the quality degradation of the radio link, a radio communication apparatus of the data receiving part carries out error compensation and the radio communication apparatus of the receiving part transmits the pseudo receipt acknowledgment signal, whereby the reduction of the throughput is avoided.

According to the data communication system of the invention, in the case where the data receiving part receives the data having the error because of the quality degradation of the radio link, the data receiving part transmits the pseudo receipt acknowledgment signal to avoid the slow start processing, so that the data communication can be quickly reopened after the recovery of the quality degradation of the radio link

Besides, the radio communication apparatus according to the invention is used for a data communication system constructed such that a data transmitting part transmits data through a radio link and a data receiving part sends back a receipt acknowledgment signal to notify reception, and includes a transmission unit for transmitting the data to the radio link, a reception unit for receiving the receipt acknowledgment signal, and a control unit for avoiding, in a case where the reception unit does not receive a receipt acknowledgment signal because of quality degradation of the radio link, a reduction of throughput which occurs in the case where the receipt acknowledgment signal can not be obtained, by using a pseudo receipt acknowledgment signal.

According to the data communication system of the invention, in the case where the receipt acknowledgment signal can not be obtained because of the quality degradation of the radio link, the pseudo receipt acknowledgment signal is used to avoid the slow start processing, so that the data communication can be quickly reopened after the recovery of the quality degradation of the radio link.

Besides, the radio communication apparatus according to the invention carries out a control so as to avoid the reduction of the throughput by transmitting the pseudo receipt acknowledgment signal to the data transmitting part in the case where the reception unit does not receive the receipt acknowledgment signal because of the quality degradation of the radio link.

Besides, the radio communication apparatus according to the invention of this application includes a radio link state judgment unit for judging the quality degradation of the radio link, in which the quality degradation of the radio link is judged by the radio link state judgment unit, and a control is carried out so as to avoid the reduction of the throughput by transmitting the pseudo receipt acknowledgment signal to the data transmitting part in the case where the reception unit does not receive the receipt acknowledgment signal.

Besides, the radio communication apparatus according to the invention of this application includes a receipt storage unit for storing the received receipt acknowledgment signal, in which the pseudo receipt acknowledgment signal is based on the receipt acknowledgment signal stored in the receipt storage unit.

Besides, the radio communication apparatus according to the invention carries out a control so that in the case where the reception unit does not receive the receipt acknowledgment signal because of the quality degradation of the radio link, a pseudo transmission data is transmitted to the receiving part.

Besides, the radio communication apparatus according to the invention includes a transmission storage unit for storing data to be transmitted, and carries out a control so that in the case where the reception unit does not receive the receipt acknowledgment signal because of the quality degradation of the radio link, the data stored in the transmission storage unit is retransmitted to the receiving side.

According to the radio communication apparatus of the invention, in the case where the transmitting side can not receive the receipt acknowledgment signal because of the quality degradation of the radio link, the pseudo receipt acknowledgment signal is transmitted to the data transmitting part to avoid the slow start processing, so that the data communication can be quickly reopened after the recovery of the quality degradation of the radio link.

Further, the data communication system according to the invention includes a base station control apparatus disposed in a data transmitting part, a plurality of base stations connected to the base station control apparatus, and a movable receiving means switchable to the plurality of base stations by handover, and is constructed such that the data transmitting part transmits data through a radio link, and the movable receiving means sends back a receipt acknowledgment signal to notify reception, in which a control is carried out so that in a case where the receipt acknowledgment signal can not be obtained because of the handover of the movable receiving means, the data transmitting part receives a pseudo receipt acknowledgment signal to avoid a reduction of throughput from the data transmitting part, which occurs in the case where the receipt acknowledgement signal can not be obtained.

According to the data communication system of the invention, in the case where the receipt acknowledgment signal can not be obtained because of the handover of the movable receiving means, the pseudo receipt acknowledgment signal is used to avoid the slow start processing, so that the data communication can be quickly reopened after the recovery of the quality degradation of the radio link.

### Brief Description of the Drawings

Fig. 1 is a block diagram showing a radio communication apparatus according to Embodiment 1 of the invention;
Fig. 2 is an explanatory view of a structure and an operation of a data communication system according to the Embodiment 1 of the invention;
Fig. 3 is an explanatory view of a structure and an operation of a data communication system according to Embodiment 2 of the invention;
Fig. 4 is a structural view of a data communication system according to Embodiment 3 of the invention;
Fig. 5 is an operation explanatory view of the data communication system according to the Embodiment 3 of the invention; and
Fig. 6 is a graph showing a time change of throughput at the time of a slow start processing in the related art.

### Best Mode for Carrying Out the Invention

### Embodiment 1

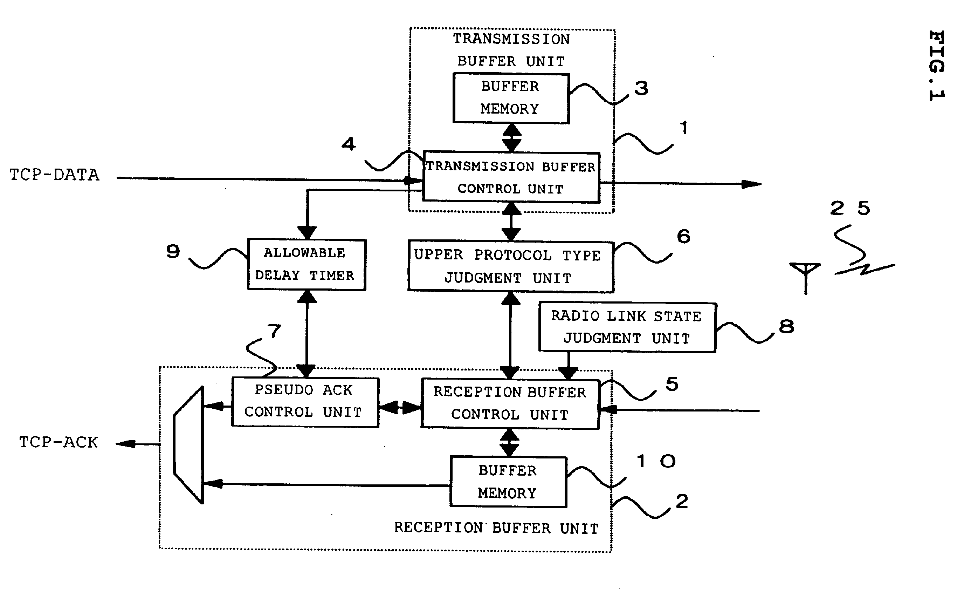

Fig. 1 is a block diagram showing a radio communication apparatus in an embodiment of the invention. In Fig. 1, a transmission buffer unit 1 includes a buffer memory 3 for storing TCP data to be transmitted and a transmission buffer control unit 4 connected to this buffer memory 3, for controlling input/output of the TCP data to and from the buffer memory 3, and has a function of transmitting the inputted TCP data (TCP-DATA) to a radio link 25. A reception buffer unit 2 receives an ACK signal from the radio link 25, and includes a buffer memory 10 for storing the received ACK signal, a reception buffer control unit 5 connected to the buffer memory 10, for controlling input/output of the ACK signal to and from the buffer memory 10, and a pseudo ACK control unit 7 connected to the reception buffer control unit 5, for generating and transmitting a pseudo ACK signal as a pseudo receipt acknowledgement signal.

An upper protocol type judgment unit 6 is connected to the transmission buffer unit 1 and the reception buffer unit 2, and judges whether data inputted to the transmission buffer unit 1 or the reception buffer unit 2 is TCP data or not. As a transport protocol equivalent to the TCP, there is UDP (User Datagram Protocol), however, in the UDP, only distribution of datagram is carried out, and receipt acknowledgment is not carried out, that is, an ACK signal is not transmitted/received, so that the invention can not be applied. Accordingly, it is necessary to judge whether data is the TCP data or not, so that the invention is applied to only the case where the data to be communicated is the TCP data.

Reference numeral 8 designates a radio link state judgment unit for monitoring and judging the state of the radio link 25 to which the radio communication apparatus is connected, in which for example, a BER (Bit Error Rate) is always measured and the result of judgment of the height of the BER with respect to a predetermined threshold is notified to the reception buffer unit 2. An allowable delay timer 9 is connected to the transmission buffer unit 1 and the reception buffer unit 2, and starts to count when the TCP data is transmitted from the transmission buffer unit 1, and in the case where an ACK signal corresponding to the transmitted TCP data is not received by the reception buffer unit 2 within a predetermined time, the timer times out and notifies the reception buffer unit 2.

Next, the operation of this radio communication apparatus will be described. First, when data to be transmitted is inputted to the transmission buffer unit 1, the upper protocol type judgment unit 6 judges the inputted data, and if it is the TCP data, the transmission buffer control unit 4 stores the data into the buffer memory 3, and transmits it to the link 25. At the same time as the transmission of the TCP data from the transmission buffer unit 1, the allowable delay timer 9 starts to count.

When the reception buffer unit 2 normally receives the ACK signal corresponding to the transmitted TCP data, the TCP data which is stored in the buffer memory 3 of the transmission buffer unit 1 and the corresponding ACK signal of which is received is deleted from the buffer memory 3. The reception buffer control unit 5 stores the received ACK signal into the buffer memory 10, and transmits it to the data transmitting part. In the case where the ACK signal corresponding to the transmitted TCP data is not received by the reception buffer unit 2, and time-out is notified from the allowable delay timer 9, on the basis of the judgment result of the radio link state judgment unit 8, the reception buffer unit 2 transmits a pseudo ACK signal to the data transmitting part. That is, the radio link state judgment unit 8 measures the BER of the received signal, and judges that the link quality is degraded in the case where the BER is higher than a predetermined threshold. On the basis of the judgment result, the reception buffer unit 2 carries out the control so that the pseudo ACK signal is generated by the pseudo ACK control unit 7 and is transmitted to the data transmitting part.

Incidentally, in the case where a signal used for the judgment is not received because of the degradation of the link quality, the radio link state judgment unit 8 recognizes the BER that it has the maximum value (1), and judges that the link quality is degraded. Besides, a judgment method of the radio link state is not limited to the foregoing method, and for example, a hysteresis judgment etc. can also be adopted in which a level of a reception electric field is measured, and it is judged that the link quality is degraded in the case where the level of the electric field becomes lower than a predetermined degradation threshold b, and it is judged that the link quality is recovered in the case where the level of the electric field becomes higher than a predetermined recovery threshold c (b < c).

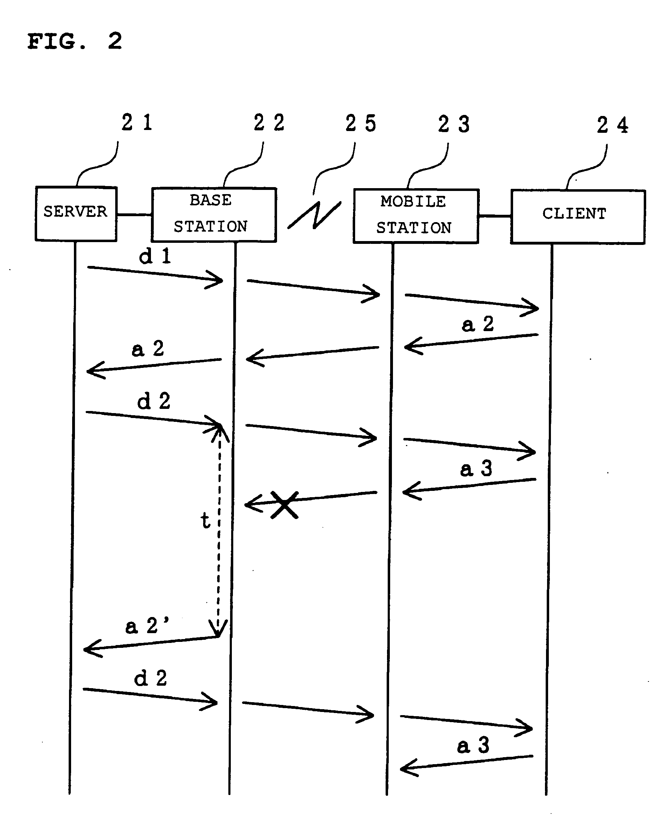

Fig. 2 is an explanatory view of a structure and an operation of a data communication system using the radio communication apparatus shown in Fig. 1, and in the drawing, the data communication system is a client server system for carrying out TCP data communication, and is constructed such that a server 21 is connected to a base station 22, a client 24 is connected to a mobile station 23, and the base station 22 and the mobile station 23 are connected to each other through a radio link 25. The base station 22 has the built-in radio communication apparatus shown in Fig. 1, transmits the TCP data inputted from the server 21 as the data transmitting part to the radio link 25, and receives an after-mentioned ACK signal to relay it to the data transmitting part. The client 24 is the data receiving part, receives the TCP data through the mobile station 23, and transmits the ACK signal as receipt acknowledgment.

Next, the operation of this client server system will be described. Here, since the details of the operation of the base station 22 are the same as those of the operation of the radio communication apparatus shown in Fig. 1, the explanation is omitted. When TCP data d1 is transmitted from the server 21, the base station 22 transmits the inputted TCP data d1 to the radio link 25. In the case where the state of the link is excellent, this TCP data d1 reaches the mobile station 23 and is delivered to the client 24. The client 24 to which the TCP data d1 is delivered transmits an ACK signal a2 as receipt acknowledgment. In the case where the state of the link is excellent, this ACK signal a2 reaches the base station 22 from the mobile station 23 through the radio link 25, and the base station 22 transmits the received ACK signal a2 to the server 21.

As stated above, in the case where the state of the link is excellent and normal data communication is carried out, the base station 22 transmits the TCP data d1 to the radio link 25, and at the same time, the allowable delay timer 9 starts to count, and the count value is cleared by receiving the ACK signal a2 corresponding to the transmitted TCP data d1 before the allowable delay timer 9 times out.

Next, when TCP data d2 is transmitted from the server 21, the base station 22 transmits the inputted TCP data d2 to the radio link 25, and at the same time, as described above, the allowable delay timer 9 starts to count. When the TCP data d2 reaches the mobile station 23 and is delivered to the client 24, the client 24 transmits an ACK signal a3 as receipt acknowledgment. If the ACK signal a3 transmitted from the mobile station 23 to the radio link 25 does not reach the base station 22 within a predetermined time t counted by the allowable delay timer 9 of the base station 22 because of some cause, this allowable delay timer 9 times out.

In the case where the ACK signal a3 does not reach the base station 22 within the predetermined time t, in the base station 22, the state measurement value of the radio link 25 by the radio link state judgment unit 8 is confirmed, and as a result, when it is judged that the quality of the radio link is degraded, it is assumed that the ACK signal a3 was not obtained because of the quality degradation of the radio link and the control is carried out to transmit a pseudo ACK signal a2' to the server 21. The server 21 receives the pseudo ACK signal a2', and retransmits the TCP data d2 of the sequence number requested on the basis of the ACK number without lowering the throughput. By this, it is possible to avoid the reduction of the throughput which is caused when the ACK signal is not obtained because of the quality degradation of the radio link. Thereafter, also in the case where the state of the radio link is recovered and the ACK signal a3 is normally received, TCP data d3 (not shown) can be quickly transmitted without carrying out the slow start processing.

In the above description, the pseudo ACK signal a2' may be made an ACK number equal to a normal ACK signal received just before, and a reception window size may be made zero. The ACK number indicates the sequence number of TCP data which is requested to be next transmitted, and the reception window size indicates a buffer size which can be received by the receiving part. When the reception window size of the pseudo ACK signal a2' is zero, the server 21 regards the processing at the client side as being congested, and makes the transmitted TCP data d2 have a minimum size for poling. Thus, such effects can be obtained that the transmission processing is reduced and the efficiency of the use of the link is improved. Besides, as the pseudo ACK signal transmitted from the reception buffer unit 2 to the data transmitting part, instead of the signal generated by the pseudo ACK control unit 7, the ACK signal already received and stored in the buffer memory 10 may be used. In that case, there is an effect that the processing is simplified.

Although Fig. 2 shows the example in which the ACK signal a3 transmitted from the mobile station 23 to the base station 22 is lost, also in the case where the TCP data d2 transmitted from the base station 22 to the mobile station 23 is lost, after the allowable delay timer 9 of the base station 22 times out, by retransmitting the TCP data without lowering the throughput similarly to the above, it is possible to avoid the reduction of the throughput which occurs when the ACK signal can not be obtained because of the quality of the radio link.

### Embodiment 2

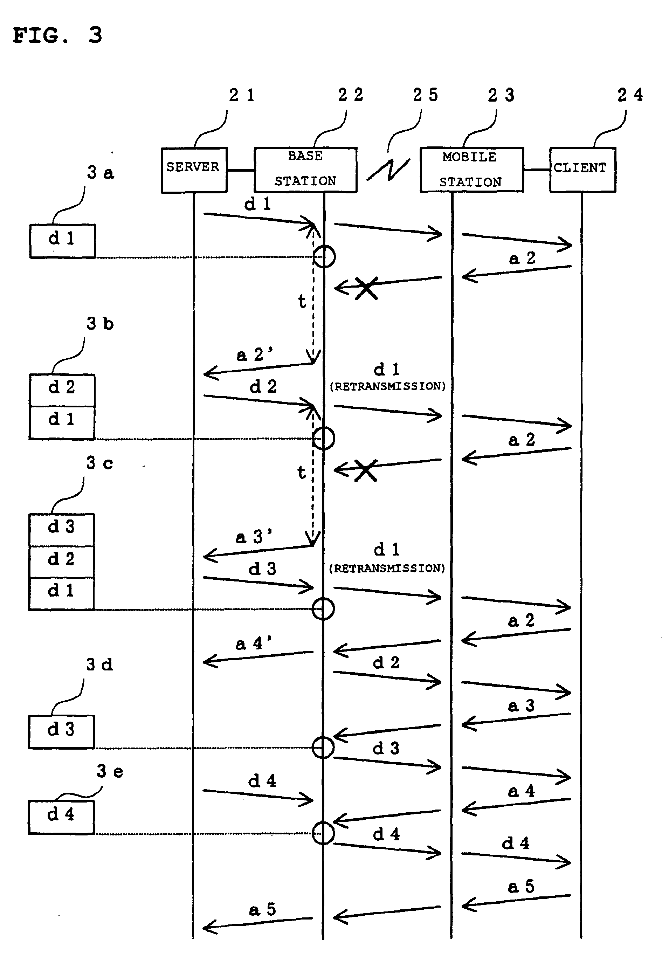

Fig. 3 is an explanatory view of a structure and an operation of another embodiment of a data communication system of the invention. In the drawing, the data communication system is a client server system for carrying out TCP data communication similarly to Fig. 2, and the same symbols as those of Fig. 2 designate the same units, and the explanation is omitted. Similarly to the embodiment 1, a base station 22 has a built-in radio communication apparatus described in the embodiment 1, however, in the embodiment 2, a buffer memory 3 (Fig. 1) of this radio communication apparatus includes capacity for storing a plurality of transmission TCP data. That is, this client server system is characterized in that the base station 22 has a function of storing a plurality of TCP data inputted from the server 21, and in the case where an ACK signal is not obtained within a predetermined time, the control is carried out so that a pseudo ACK signal in which an ACK number is advanced is transmitted to the server 21 to urge the input of new TCP data successively, and the stored TCP data is transmitted and retransmitted to a client 24 irrespective of the operation of the server 21.

Next, the detailed operation of this client server system will be described. Reference symbols 3a to 3e designate the content of the buffer memory 3 of the transmission buffer unit in Fig. 1, that is, stored data. Since the details of the operation of the base station 22 are the same as those of the operation of the radio communication apparatus shown in Fig. 1, the explanation is omitted.

When TCP data d1 is transmitted from the server 21, the base station 22 stores the inputted TCP data d1 into the buffer memory 3, and transmits it to the radio link 25. At the same time, as described before, the allowable delay timer 9 starts to count. The content of the buffer memory 3 becomes the data d1 as indicated by the symbol 3a. When this TCP data d1 reaches the mobile station 23 and is delivered to the client 24, the client 24 transmits an ACK signal a2 as receipt acknowledgment. If the ACK signal a2 transmitted from the mobile station 23 to the radio link 25 does not reach the base station 22 because of some cause within a predetermined time t counted by the allowable delay timer 9 of the base station 22, this allowable delay timer 9 times out.

At this time, in the base station 22, the state of the radio link 25 is measured by the radio link state judgment unit 8, and as a result, if it is judged that the link quality is degraded, it is assumed that the ACK signal a2 was not obtained because of the quality degradation of the radio link, and the control is carried out to transmit a pseudo ACK signal a2' having an ACK number equal to the ACK signal a2 corresponding to the TCP data d1 received from the server 21 just before. The server 21 receives the pseudo ACK signal a2', and transmits TCP data d2 of a requested sequence number to the base station 22 on the basis of the ACK number of the pseudo ACK signal a2'. That is, the server 21 carries out the same operation as the case where the ACK signal a2 corresponding to the transmitted TCP data d1 was obtained.

Next, the base station 22 which received the TCP data d2 from the server 21 stores this into the buffer memory 3, and retransmits the oldest TCP data stored in the buffer memory 3, that is, the oldest TCP data d1 in relation to which the corresponding normal ACK signal is not received, to the radio link 25. The content of the buffer memory 3 becomes the data d1 plus the data d2 as indicated by the symbol 3b. At the same time, the allowable delay timer 9 starts to count. At this time, in the case where the ACK signal a2 corresponding to the retransmitted TCP data d1 is not obtained again, and the allowable delay timer 9 times out, it is judged that the quality of the radio link is degraded, a pseudo ACK signal a3' having an ACK number equal to an ACK signal a3 corresponding to the TCP data d2 received from the server 21 just before is transmitted to the server 21. The server 21 receives the pseudo ACK signal a3', and transmits TCP data d3 of a requested sequence number to the base station 22 on the basis of the ACK number. That is, the server 21 carries out the same operation as the case where the ACK signal a3 corresponding to the transmitted TCP data d2 is obtained.

Besides, the base station 22 which received the TCP data d3 from the server 21 stores this into the buffer memory 3, and further retransmits the oldest TCP data d1 stored in the buffer memory 3 to the radio link 25. The content of the buffer memory 3 becomes the data d1, the data d2, plus the data d3 as indicated by the symbol 3c. At the same time, the allowable delay timer 9 starts to count. If the quality degradation of the radio link is recovered and the ACK signal a2 is received before the allowable delay timer 9 times out, not the ACK signal a2, but a pseudo ACK signal a4' having an ACK number equal to an ACK signal a4 corresponding to the TCP data d3 received from the server 21 just before is transmitted to the server 21. At this time, the TCP data d1 in relation to which the corresponding ACK signal a2 is received is deleted from the buffer memory 3. Irrespective of the operation of the server 21, the TCP data d2 requested by the ACK signal a2 is read out from the buffer memory 3 and is transmitted to the radio link 25.

Here, further, when the base station 22 normally receives the ACK signal a3, the corresponding TCP data d2 is deleted from the buffer memory 3, and the content of the buffer memory 3 becomes the data d3 as indicated by the symbol 3d, and irrespective of the operation of the server 21, the TCP data d3 requested by the ACK signal a3 is read out from the buffer memory 3 and is transmitted to the radio link 25. Since the pseudo ACK signal a4' corresponding to the TCP data d3 received from the server 21 just before is already transmitted to the server 21, anything is not transmitted to the server 21 at this time.

On the other hand, the server 21, which received the pseudo ACK signal a4' from the base station 22, transmits TCP data d4 to the base station 22 on the basis of the ACK number. That is, the server 21 carries out the same operation as the case where the ACK signal a4 corresponding to the transmitted TCP data d3 was obtained. When receiving the TCP data d4 from the server 21, the base station 22 temporarily stores it into the buffer memory 3, waits for the reception of the ACK signal a4, and reads out it from the buffer memory 3 to transmit to the radio link 25. The content of the buffer memory 3 becomes the data d4 as indicated by symbol 3e. When an ACK signal a5 is received, the ACK signal a5 as the ACK signal corresponding to the TCP data d4 received from the server 21 just before is transmitted to the server 21 as it is.

In the client server system controlled as described above, since the server 21 operates irrespectively of the quality degradation of the radio link, the reduction of the throughput can be avoided, and in this structure, since the window size of the ACK signal is not made zero, and the extension of a poling frequency by zero window search can also be prevented, the data communication can be quickly started after the recovery of the quality degradation of the radio link.

Although Fig. 3 shows the example in which the ACK signal transmitted from the mobile station 23 to the base station 22 is lost, in the case where the TCP data transmitted from the base station 22 to the mobile station 23 is lost, it is conceivable that for example, with respect to the TCP data, especially to a header portion, means for carrying out FEC (Forward Error Correction) strengthening, HEC (Header Error Control) extension, or a processing such as bit interleave a header into a data portion is provided at a transmitting side radio communication apparatus, and means for recovering the header portion is provided at a receiving side radio communication apparatus. By doing so, in the mobile station 23 as the receiving side radio communication apparatus, there occurs a case where at least the header portion can be recovered by error correction and can be read out from the TCP data in which an error occurs by some cause. In this case, a control may be carried out so that the mobile station 23 stores a recently transmitted ACK signal, copies an ACK signal corresponding to the TCP header which could be read out, and sends it back to the server 21 through the base station 22. Further, the window size of the ACK signal may be changed to zero.

In the case of the above, when receiving the ACK signal, the server 21 retransmits the TCP data, or transmits poling TCP data corresponding to the zero window ACK signal. That is, since the server 21 can receive the ACK signal sent back from the mobile station 23 without waiting for the time-out of the allowable delay timer 9 of the base station 22, the reduction of the throughput can be avoided, and the communication can be more quickly reopened after the recovery of the quality degradation of the radio link.

The above structure shows the case where the base station 22 has the built-in radio communication apparatus shown in Fig. 1, the TCP data is transmitted in the direction from the base station 22 to the mobile station 23, and the ACK signal is sent back in the direction from the mobile station 23 to the base station 22. However, of course, the invention is not be limited to this, and even when such a structure is adopted that the mobile station 23 has the built-in radio communication apparatus shown in Fig. 1, the TCP data is transmitted in the direction from the mobile station 23 to the base station 22, and the ACK signal is transmitted in the direction from the base station 22 to the mobile station 23, the same effect as the above can be obtained. Besides, also in the case where the server 21 is contained in the base station 22 similarly to the radio communication apparatus, and the client 24 is contained in the mobile station 23, the same operation and effect can be obtained.

### Embodiment 3

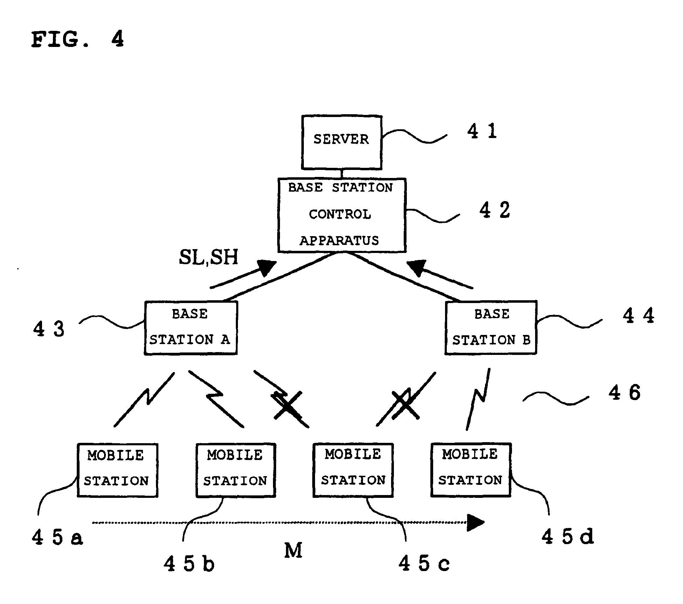

Fig. 4 is a structural view showing another embodiment of a data communication system according to the invention. In the drawing, this data communication system includes a server 41, a base station control apparatus 42, a base station A 43, a base station B 44, and a mobile station 45. The server 41, the base station A 43, and the base station B 44 are respectively connected to the base station control apparatus 42, and the mobile station 45 is connected through a radio link 46 to the base station A and the base station B changeably by handover. In Fig. 4, symbols 45a, 45b, 45c, 45d do not indicate that there are plural mobile stations, but indicate that the one mobile station 45 moves in the direction of an arrow M temporally. Incidentally, here, it is assumed that the mobile station has a built-in TCP client function or is connected thereto.

The base station A 43 and the base station B 44 have a function of notifying the base station control apparatus 42 of the radio link quality information and the handover information of the mobile station 45. The mobile station 45 is a movable receiving means, receives TCP data through the radio link 46, and transmits an ACK signal as receipt acknowledgment. The base station control apparatus 42 has the built-in radio communication apparatus as described in the embodiment 1, transmits the TCP data inputted from the server 41 as a data transmitting part through the base station 42 to the radio link 46, receives the ACK signal through the base station 42 and transfers it to the server 41. In the radio communication apparatus of the embodiment 3, especially the reception buffer unit 2 has a function of obtaining the handover information of the mobile station 45 from the base station A 43 and the base station B 44. That is, this data communication system is characterized in that in the case where the ACK signal can not be obtained within a predetermined time because of the quality degradation of the radio link, or because of interruption (instantaneous interruption) of the TCP communication caused when the handover of the mobile station 45 occurs from the base station A to the base station B, the control is carried out so that a false ACK signal is used to avoid a reduction of throughput from the server 41.

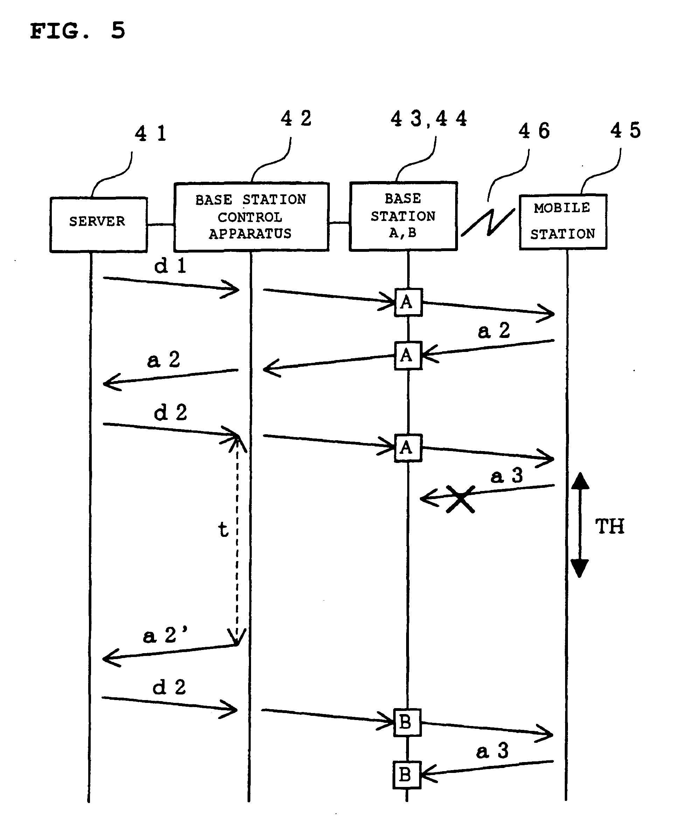

Fig. 5 is an operation explanatory view showing an operation of this data communication system, and the detailed operation of this data communication system will be described by use of this drawing. Since the same symbols as those of Fig. 4 designate the same units, the explanation is omitted. Besides, since the details of the operation of the base station control apparatus 42 is the same as the operation of the radio communication apparatus shown in Fig. 1, the explanation is omitted. Incidentally, in Fig. 5, reference symbol TH designates a handover period of the mobile station 45.

When TCP data d1 is transmitted from a server 41, the base station control apparatus 42 transmits the inputted TCP data d1 through a base station A 43 to a radio link 46. In the case where the state of the link is excellent, the TCP data d1 reaches a mobile station 45, and the mobile station 45 transmits an ACK signal a2 as receipt acknowledgment. In the case where the state of the link is excellent, this ACK signal a2 reaches the base station control apparatus 42 through the radio link 46 and the base station A 43, and the base station control apparatus 42 transmits the received ACK signal a2 to the server 41.

The base station 42 transmits the TCP data d1 to the base station A 43, and at the same time, an allowable delay timer 9 starts to count, and in the case where the state of the link is excellent and normal data communication is carried out as stated above, the ACK signal a1 corresponding to the transmitted TCP data d1 is received before the allowable delay timer 9 times out, so that the count value is cleared.

Next, when TCP data d2 is transmitted from the server 41, the base station control apparatus 42 transmits the inputted TCP data d2 to the base station A 43, and at the same time, the allowable delay timer 9 starts to count as described before. When this TCP data d2 reaches the mobile station 45, the mobile station 45 transmits an ACK signal a3 as receipt acknowledgment. If this ACK signal a3 does not reach the base station control apparatus 42 by some cause within a predetermined time t counted by the allowable delay timer 9 of the base station control apparatus 42, this allowable delay timer 9 times out.

At this time, in the base station control apparatus 42, the state of the radio link 46 is measured by a radio link state judgment unit 8, and the existence of handover information from the base station A 43 or the base station B 44 is confirmed. As a result, when information SL to indicate the degradation of the quality of the radio link is obtained or handover information SH of the mobile station 45 is obtained, the control is carried out to transmit a pseudo ACK signal a2' having an ACK number equal to the normal ACK signal received just before to the server 41. The server 41 receives the pseudo ACK signal a2', and retransmits the TCP data d2 of a request sequence number on the basis of the ACK number. By this, it is possible to avoid the reduction of throughput which is caused when the ACK signal can not be obtained because of the quality degradation of the radio link (including the instantaneous interruption of the link by the handover of the mobile station 45). Thereafter, when the quality degradation of the radio link is recovered and the ACK signal a3 is normally received, TCP data d3 (not shown) can be quickly transmitted without carrying out a slow start processing.

Incidentally, similarly to the base station 22 of the embodiment 2, in the case where the base station control apparatus 42 includes the buffer memory 3 which can store a plurality of pieces of TCP data to be transmitted, and has a built-in false ACK signal control function and TCP data buffering function, since the server 21 operates irrespectively of the quality degradation of the radio link such as instantaneous interruption of the link by handover, this data communication system can also obtain the same effect as the embodiment 2.

Further, although Fig. 5 shows the example in which the ACK signal a3 transmitted from the mobile station 45 to the base station A 43 or the base station B 44 is lost, also in the case where the TCP data d2 transmitted from the base station A 43 to the mobile station 45 is lost, when the same processing as the above is carried out after the allowable delay timer 9 of the base station control apparatus 42 times out, the same effect can be obtained.

### Industrial Applicability

This invention is used for various data communication systems for carrying out data communication, or various radio communication apparatuses for carrying out the data communication.

## Claims

1. A data communication system, comprising:
- a data transmitting part (21, 22; 41, 42, 43, 44) for transmitting data through a radio link (25); and
- a data receiving part (23, 24, 45) for sending back a receipt acknowledgment signal (ACK) to notify reception, wherein a slow start processing is carried out by the data transmitting part (21, 22; 41, 42, 43, 44) if the receipt acknowledgement signal (ACK) is not received within a predetermined time-out period, wherein the slow start processing lowers the throughput and then gradually increases the throughput in a given time period,
**characterized in that** in a case, where the receipt acknowledgment signal (ACK) cannot be obtained by the data transmitting part (21, 22; 41, 42, 43, 44) within the predetermined time-out period because of a quality degradation of the radio link (25), a control is carried out by the data transmitting part (21, 22; 41, 42, 43, 44) so that a pseudo receipt acknowledgment signal is used to avoid the slow start processing causing a reduction of throughput from the data transmitting part (21, 22; 41, 42, 43, 44).

2. The system according to claim 1,
**characterized in that** in the case, where the receipt acknowledgment signal (ACK) cannot be obtained by the data transmitting part (21, 22; 41, 42, 43, 44) within the predetermined time-out period because of the quality degradation of the radio link (25), a control is carried out so that the data transmitting part (21, 22; 41, 42, 43, 44) generates the pseudo receipt acknowledgment signal to avoid the slow start processing.

3. The system according to claim 1,
**characterized in that** in a case, where the data receiving part (23, 24, 45) receives data having an error because of the quality degradation of the radio link (25), a control is carried out so that the data receiving part (23, 24, 45) including means for compensating the error transmit the pseudo receipt acknowledgment signal to avoid the slow start processing.

4. The system according to any of claims 1 to 3,
wherein one of the data transmitting part (21, 22; 41, 42, 43, 44) and the data receiving part (23, 24, 45) comprises a radio communication apparatus which comprises:
- a transmission unit (4) for transmitting the data to the radio link (25);
- a reception unit (5) for receiving the receipt acknowledgment signal (ACK); and
- a control unit (7) for avoiding, in a case where the reception unit (5) does not receive the receipt acknowledgment signal (ACK) within the predetermined time-out period because of quality degradation of the radio link (25), the slow start processing by using the pseudo receipt acknowledgment signal.

5. The system according to claim 4,
**characterized in that** in the case where the reception unit (5) does not receive the receipt acknowledgment signal (ACK) within the predetermined time-out period because of the quality degradation of the radio link (25), the control unit (7) transmits the pseudo receipt acknowledgment signal to the transmission unit (4) to avoid the slow start processing.

6. The system according to claim 4 or 5, **characterized in that** the radio communication apparatus further comprises a radio link state judgment unit (8) for judging the quality degradation of the radio link (25), and
**in that** the quality degradation of the radio link (25) is judged by the radio link state judgment unit (8), and in the case, where the reception unit (5) does not receive the receipt acknowledgment signal (ACK) within the predetermined time-out period, the control unit (7) transmits the pseudo receipt acknowledgment signal to the transmission unit (4) to avoid the slow start processing.

7. The system according to any of claims 4 to 6,
**characterized in that** the radio communication apparatus further comprises a reception storage unit (10) for storing the received receipt acknowledgment signal (ACK), and
**in that** the pseudo receipt acknowledgment signal is based on the receipt acknowledgment signal stored in the reception storage unit (10).

8. The system according to claim 4,
**characterized in that** in the case, where the reception unit (5) does not receive the receipt acknowledgment signal (ACK) within the predetermined time-out period because of the quality degradation of the radio link (25), the transmission unit (4) transmits the pseudo receipt acknowledgement signal to the data receiving part (23, 24, 45).

9. The system according to any of claims 4 to 8,
**characterized in that** the radio communication apparatus further comprises a transmission storage unit (3) for storing data to be transmitted, and
in the case, where the reception unit (5) does not receive the receipt acknowledgement signal (ACK) within the predetermined time-out period because of the quality degradation of the radio link (25), the transmission unit (4) retransmits the data stored in the transmission storage unit (3) to the data receiving part (23, 24, 45).

10. The system according to any of claims 1 to 9,
**characterized in that** the data transmitting part (41 - 44) comprises a base station control apparatus (42) and a plurality of base stations (43, 44) connected to the base station control apparatus (42),
and **in that** the data receiving part (45) comprises a plurality of movable receiving means (45a, 45b, 45c, 45d) switchable to the base station (43, 44) by handover,
wherein the base station (43, 44) transmits data through the radio link (25), and the movable receiving means (45a, 45b, 45c, 45d) send back the receipt acknowledgement signal (ACK) to notify reception, and
in a case, where the receipt acknowledgment signal (ACK) cannot be obtained by the base station (43, 44) because of the handover of the movable receiving means (45a, 45b, 45c, 45d), a control is carried out so that the base station (43, 44) generates the pseudo receipt acknowledgment signal to avoid the slow start processing.

## Patentansprüche

1. Datenübermittlungssystem, das folgendes aufweist:
- ein Datensendeteil (21, 22; 41, 42, 43, 44) zum Senden von Daten über eine Funkverbindung (25); und
- ein Datenempfangsteil (23, 24, 45) zum Zurücksenden eines Empfangsbestätigungssignals (ACK), um den Empfang mitzuteilen, wobei von dem Datensendeteil (21, 22; 41, 42, 43, 44) eine Slow-Start-Verarbeitung ausgeführt wird, wenn das Empfangsbestätigungssignal (ACK) nicht innerhalb einer vorbestimmten Zeitüberwachungsdauer empfangen wird, wobei die Slow-Start-Verarbeitung den Durchsatz senkt und dann den Durchsatz allmählich innerhalb einer gegebenen Zeitdauer erhöht,
**dadurch gekennzeichnet,**
**daß** dann, wenn das Empfangsbestätigungssignal (ACK) von dem Datensendeteil (21, 22; 41, 42, 43, 44) wegen eines Güteverlusts der Funkverbindung (25) nicht innerhalb der vorbestimmten Zeitüberwachungsdauer erhalten werden kann, von dem Datensendeteil (21, 22; 41, 42, 43, 44) eine Steuerung ausgeführt wird, so daß ein Pseudo-Empfangsbestätigungssignal verwendet wird, um zu vermeiden, daß die Slow-Start-Verarbeitung eine Verringerung des Durchsatzes von dem Datensendeteil (21, 22; 41, 42, 43, 44) verursacht.

2. System nach Anspruch 1,
**dadurch gekennzeichnet,**
**daß** dann, wenn das Empfangsbestätigungssignal (ACK) von dem Datensendeteil (21, 22; 41, 42, 43, 44) wegen des Güteverlusts der Funkverbindung (25) nicht innerhalb der vorbestimmten Zeitüberwachungsdauer erhalten werden kann, eine Steuerung ausgeführt wird, so daß das Datensendeteil (21, 22; 41, 42, 43, 44) das Pseudo-Empfangsbestätigungssignal erzeugt, um die Slow-Start-Verarbeitung zu vermeiden.

3. System nach Anspruch 1,
**dadurch gekennzeichnet,**
**daß** dann, wenn das Datenempfangsteil (23, 24, 45) Daten empfängt, die wegen des Güteverlusts der Funkverbindung (25) einen Fehler haben, eine Steuerung ausgeführt wird, so daß das Datenempfangsteil (23, 24, 45), das eine Einrichtung zum Kompensieren des Fehlers aufweist, das Pseudo-Empfangsbestätigungssignal sendet, um die Slow-Start-Verarbeitung zu vermeiden.

4. System nach einem der Ansprüche 1 bis 3,
wobei eines von dem Datensendeteil (21, 22; 41, 42, 43, 44) und dem Datenempfangsteil (23, 24, 45) eine Funkkommunikationsvorrichtung aufweist, die folgendes aufweist:
- eine Sendeeinheit (4) zum Senden der Daten an die Funkverbindung (25);
- eine Empfangseinheit (5) zum Empfangen des Empfangsbestätigungssignals (ACK); und
- eine Steuereinheit (7), um dann, wenn die Empfangseinheit (5) das Empfangsbestätigungssignal (ACK) wegen des Güteverlusts der Funkverbindung (25) nicht innerhalb der vorbestimmten Zeitüberwachungsdauer empfängt, die Slow-Start-Verarbeitung unter Verwendung des Pseudo-Empfangsbestätigungssignals zu vermeiden.

5. System nach Anspruch 4,
**dadurch gekennzeichnet,**
**daß** dann, wenn die Empfangseinheit (5) das Empfangsbestätigungssignal (ACK) wegen des Güteverlust der Funkverbindung (25) nicht innerhalb der vorbestimmten Zeitüberwachungsdauer empfängt, die Steuereinheit (7) das Pseudo-Empfangsbestätigungssignal an die Sendeeinheit (4) sendet, um die Slow-Start-Verarbeitung zu vermeiden.

6. System nach Anspruch 4 oder 5,
**dadurch gekennzeichnet,**
**daß** die Funkkommunikationsvorrichtung ferner eine Funkverbindungszustand-Beurteilungseinheit (8) zum Beurteilen des Güteverlusts der Funkverbindung (25) aufweist,
und **daß** der Güteverlust der Funkverbindung (25) von der Funkverbindungszustand-Beurteilungseinheit (8) beurteilt wird, und daß dann, wenn die Empfangseinheit (5) das Empfangsbestätigungssignal (ACK) nicht innerhalb der vorbestimmten Zeitüberwachungsdauer empfängt, die Steuereinheit (7) das Pseudo-Empfangsbestätigungssignal an die Sendeeinheit (4) sendet, um die Slow-Start-Verarbeitung zu vermeiden.

7. System nach einem der Ansprüche 4 bis 6,
**dadurch gekennzeichnet,**
**daß** die Funkkommunikationsvorrichtung ferner eine Empfangsspeichereinheit (10) zum Speichern des empfangenen Empfangsbestätigungssignals (ACK) aufweist,
und **daß** das Pseudo-Empfangsbestätigungssignal auf dem in der Empfangsspeichereinheit (10) gespeicherten Empfangsbestätigungssignal basiert.

8. System nach Anspruch 4,
**dadurch gekennzeichnet,**
**daß** dann, wenn die Empfangseinheit (5) das Empfangsbestätigungssignal (ACK) wegen des Güteverlusts der Funkverbindung (25) nicht innerhalb der vorbestimmten Zeitüberwachungsdauer empfängt, die Sendeeinheit (4) das Pseudo-Empfangsbestätigungssignal an das Datenempfangsteil (23, 24, 45) sendet.

9. System nach einem der Ansprüche 4 bis 8,
**dadurch gekennzeichnet,**
**daß** die Funkkommunikationsvorrichtung ferner eine Sendespeichereinheit (3) zum Speichern von zu sendenden Daten aufweist, und daß dann, wenn die Empfangseinheit (5) das Empfangsbestätigungssignal (ACK) wegen des Güteverlusts der Funkverbindung (25) nicht innerhalb der vorbestimmten Zeitüberwachungsdauer empfängt, die Sendeeinheit (4) die in der Sendespeichereinheit (3) gespeicherten Daten erneut an das Datenempfangsteil (23, 24, 45) sendet.

10. System nach einem der Ansprüche 1 bis 9,
**dadurch gekennzeichnet,**
**daß** das Datensendeteil (41 - 44) folgendes aufweist:
eine Basisstation-Steuervorrichtung (42) und eine Vielzahl von Basisstationen (43, 44), die mit der Basisstation-Steuervorrichtung (42) verbunden sind,
und **daß** das Datenempfangsteil (45) folgendes aufweist:
eine Vielzahl von beweglichen Empfangseinrichtungen (45a, 45b, 45c, 45d), die durch Umschaltung auf die Basisstation (43, 44) umschaltbar sind, wobei die Basisstation (43, 44) über die Funkverbindung (25) Daten sendet, und die beweglichen Empfangseinrichtungen (45a, 45b, 45c, 45d) das Empfangsbestätigungssignal (ACK) zurücksenden, um den Empfang mitzuteilen,
und **daß** dann, wenn das Empfangsbestätigungssignal (ACK) von der Basisstation (43, 44) wegen der Umschaltung der beweglichen Empfangseinrichtungen (45a, 45b, 45c, 45d) nicht erhalten werden kann, eine Steuerung ausgeführt wird, so daß die Basisstation (43, 44) das Pseudo-Empfangsbestätigungssignal erzeugt, um die Slow-Start-Verarbeitung zu vermeiden.

## Revendications

1. Système de communication de données, comprenant :
- une partie émettrice de données (21, 22; 41, 42, 43, 44) pour émettre des données par une liaison radio (25); et
- une partie réceptrice de données (23, 24, 45) pour renvoyer un signal d'accusé de réception (ACK) afin de notifier la réception, dans laquelle un traitement à démarrage lent est effectué par la partie émettrice de données (21, 22; 41, 42, 43, 44) si le signal d'accusé de réception (ACK) n'est pas reçu dans un délai d'attente prédéterminé, dans laquelle le traitement à démarrage lent abaisse le débit et ensuite augmente graduellement le débit dans une période de temps donnée,
**caractérisé en ce que**, dans un cas où le signal d'accusé de réception (ACK) ne peut pas être obtenu par la partie émettrice de données (21, 22; 41, 42, 43, 44) dans le délai d'attente prédéterminé en raison d'une dégradation de qualité de la liaison radio (25), une commande est effectuée par la partie émettrice de données (21, 22; 41, 42, 43, 44) de sorte qu'un pseudo-signal d'accusé de réception soit utilisé pour empêcher un traitement à démarrage lent entraînant une réduction du débit de la partie émettrice de données (21, 22; 41, 42, 43, 44).

2. Système selon la revendication 1,
**caractérisé en ce que**, dans le cas où le signal d'accusé de réception (ACK) ne peut être obtenu par la partie émettrice de données (21, 22; 41, 42, 43, 44) dans le délai d'attente prédéterminé en raison de la dégradation de qualité de la liaison radio (25), une commande est effectuée pour que la partie émettrice de données (21, 22; 41, 42, 43, 44) génère le pseudo-signal d'accusé de réception afin d'empêcher un traitement à démarrage lent .

3. Système selon la revendication 1,
**caractérisé en ce que**, dans un cas où la partie réceptrice de données (23, 24, 45) reçoit des données contenant une erreur en raison de la dégradation de qualité de la liaison radio (25), une commande est effectuée pour que la partie réceptrice de données (23, 24, 45), comprenant des moyens pour compenser l'erreur, transmette le pseudo-signal d'accusé de réception afin d'empêcher le traitement à démarrage lent .

4. Système selon une quelconque des revendications 1 à 3,
dans lequel une de la partie émettrice de données (21, 22; 41, 42, 43, 44) et de la partie réceptrice de données (23, 24, 45) comprend un appareil de communication radio qui comprend :
- une unité émettrice (4) pour transmettre les données à la liaison radio (25);
- une unité réceptrice (5) pour recevoir le signal d'accusé de réception (ACK); et
- une unité de commande (7) pour empêcher, dans le cas où l'unité réceptrice (5) ne reçoit pas le signal d'accusé de réception (ACK) dans le délai d'attente prédéterminé en raison de la dégradation de qualité de la liaison radio (25), le traitement à démarrage lent en utilisant le pseudo-signal d'accusé de réception.

5. Système selon la revendication 4,
**caractérisé en ce que**, dans le cas où l'unité réceptrice (5) ne reçoit pas le signal d'accusé de réception (ACK) dans le délai d'attente prédéterminé en raison de la dégradation de qualité de la liaison radio (25), l'unité de commande (7) transmet le pseudo-signal d'accusé de réception à l'unité émettrice (4) pour empêcher le traitement à démarrage lent.

6. Système selon la revendication 4 ou 5,
**caractérisé en ce que** l'appareil de communication radio comprend en outre une unité (8) de jugement de l'état de la liaison radio pour juger de la dégradation de qualité de la liaison radio (25), et
**en ce que** la dégradation de qualité de la liaison radio (25) est jugée par l'unité (8) de jugement de l'état de la liaison radio, et, dans le cas où l'unité réceptrice (5) ne reçoit pas le signal d'accusé de réception (ACK) dans le délai d'attente prédéterminé, l'unité de commande (7) transmet le pseudo-signal d'accusé de réception à l'unité émettrice (4) afin d'empêcher le traitement à démarrage lent.

7. Système selon l'une quelconque des revendications 4 à 6,
**caractérisé en ce que** l'appareil de communication radio comprend en outre une unité de stockage de réception (10) pour stocker le signal d'accusé de réception (ACK) reçu, et
**en ce que** le pseudo-signal d'accusé de réception est basé sur le signal d'accusé de réception stocké dans l'unité de stockage de réception (10).

8. Système selon la revendication 4,
**caractérisé en ce que**, dans le cas où l'unité réceptrice (5) ne reçoit pas le signal d'accusé de réception (ACK) dans le délai d'attente prédéterminé en raison de la dégradation de la qualité de la liaison radio (25), l'unité émettrice (4) transmet le pseudo-signal d'accusé de réception à la partie réceptrice de données (23, 24, 25).

9. Système selon l'une quelconque des revendications 4 à 8,
**caractérisé en ce que** l'appareil de communication radio comprend en outre une unité de stockage de transmission (3) pour stocker les données à émettre et, dans le cas où l'unité de réception (5) ne reçoit pas le signal d'accusé de réception (ACK) dans le délai d'attente prédéterminé en raison de la dégradation de qualité de la liaison radio (25), l'unité émettrice (4) retransmet les données stockées dans l'unité de stockage de transmission (3) à la partie réceptrice de données (23, 24, 45).

10. Système selon l'une quelconque des revendications 1 à 9,
**caractérisé en ce que** la partie émettrice de données (41 - 44) comprend un appareil de commande de stations de base (42) et une pluralité de stations de base (43, 44) connectées à l'appareil de commande de stations de base (42),
et **en ce que** la partie réceptrice de données (45) comprend une pluralité de moyens de réception mobiles (45a, 45b, 45c, 45d) pouvant être commutés sur la station de base (43, 44) par transfert intercellulaire, dans lequel la station de base (43, 44) transmet des données par la liaison radio (25), et les moyens de réception mobiles (45a, 45b, 45c, 45d) renvoient le signal d'accusé de réception (ACK) pour notifier la réception, et,
dans le cas où le signal d'accusé de réception (ACK) ne peut être obtenu par la station de base (43, 44) en raison du transfert intercellulaire des moyens de réception mobiles (45a, 45b, 45c, 45d), une commande est effectuée pour que la station de base (43, 44) génère le pseudo-signal d'accusé de réception afin d'empêcher le traitement à démarrage lent.
